# FASCICULE DE BREVET EUROPEEN

(11) **EP 1 467 885 B1**
(45) Date de publication et mention de la délivrance du brevet: **03.05.2006**
(21) Numéro de dépôt: 03712274.4
(22) Date de dépôt: 21.01.2003
(51) Int. Cl.: B60J 10/00, B60J 10/02

(54) **JOINT DE GARNITURE POUR VITRE FIXE SOLIDARISEE AUX REBORDS D'UNE OUVERTURE ET PROCEDE DE FABRICATION DE CELUI-CI**
DICHTUNG FÜR FEST EINGEBAUTE SCHEIBEN, DIE MIT DER DER SCHEIBENEINFASSUNG FEST VERBUNDEN IST UND DAS HERSTELLUNGSVERFAHREN DAZU
GASKET SEAL FOR A FIXED WINDOW WHICH IS SOLIDLY CONNECTED TO THE FLANGES OF AN OPENING AND THE PRODUCTION METHOD THEREOF

(30) Priorité: 22.01.2002 FR 0200754
(43) Date de publication de la demande: 20.10.2004
(73) Titulaire: Rehau SA, 57340 Morhange (FR)
(72) Inventeur: PENNERATH, Eddy, F-57450 Henriville (FR)
(74) Mandataire: Metz, Paul
(86) Numéro de dépôt international: PCT/FR2003/000191
(87) Numéro de publication internationale: WO 2003/062003

(56) Documents cités:
- EP-A- 0 128 837
- WO-A-01/85481
- DE-A- 3 413 003
- US-A- 5 395 563
- US-A- 5 538 314
- US-A- 5 779 297
- US-A- 6 095 586
- US-B1- 6 174 477

## Description

La présente invention concerne un joint périmétrique de garniture destiné à ceinturer une vitre rapportée sur une ouverture de carrosserie de véhicules et notamment un pare-brise, une custode ou une lunette arrière.

L'invention se rapporte également à un procédé de fabrication particulièrement avantageux d'un tel joint de garniture.

Actuellement, la pose des vitres fixes au cours de l'assemblage des véhicules, par exemple automobiles, est généralement effectuée de manière entièrement automatisée par des machines-outils.

Les vitres fixes, telles que par exemple les pare-brise, lunettes arrière ou custodes, sont maintenant classiquement solidarisées par collage sur un repli de la carrosserie formant la feuillure de l'ouverture au moyen d'un cordon périphérique d'adhésif.

Du fait des tolérances de fabrication existant au niveau de la carrosserie et d'un intervalle nécessaire de dilatation, il existe, lorsque la vitre est mise en place, un interstice relativement grand entre le bord de la vitre et l'extrémité de la carrosserie.

Pour des raisons esthétiques, il est souhaitable de masquer cet interstice en le recouvrant par un profilé d'encadrement ou joint périmétrique de garniture également appelé enjoliveur, qui peut par exemple comporter une lèvre souple de masquage servant à compenser ces tolérances; voir, par example, le document US5538314.

En plus de leur fonction esthétique, ces profilés d'encadrement doivent également remplir une fonction supplémentaire de positionnement de la vitre, liée au mode d'assemblage par collage de celle-ci sur les bords de l'ouverture de carrosserie.

En effet, au cours du procédé de montage, un cordon de colle est déposé sur le repli de la tôle de carrosserie. La vitre est ensuite saisie par une machine-outil généralement au moyen de ventouses, puis placée au niveau de l'ouverture à obturer et finalement pressée contre le cordon de colle jusqu'à ce qu'elle soit dans la position souhaitée.

Pour des raisons d'écoulement de l'air et d'esthétique, on cherche actuellement à positionner les vitres de manière à ce qu'elles affleurent au niveau de la carrosserie, sans aucun décalage ou protubérance entre la vitre et la tôle adjacente de carrosserie.

Par ailleurs, lors de la mise en place de la vitre, un écartement optimal entre la vitre et le repli de carrosserie doit être respecté afin que d'une part l'écrasement du cordon de colle soit suffisant pour assurer un collage parfait et une bonne étanchéité entre la vitre et la carrosserie, et que d'autre part la vitre n'exerce pas une pression trop forte sur le cordon de colle encore liquide afin d'éviter que cette dernière ne déborde et ne bave sur la carrosserie.

Pour toutes ces raisons, il convient de maintenir un écartement précis entre la vitre et le repli de carrosserie formant le rebord de l'ouverture. Avantageusement, le joint de garniture peut comporter en outre des moyens de butée permettant de régler cet écartement.

Dans l'art antérieur, différents modèles de profilés d'encadrement, permettant le maintien à distance de la vitre par rapport aux bords de l'ouverture de carrosserie, ont été proposés. On connaît ainsi par exemple les profilés décrits dans la demande de brevet français FR 2.340.217 au nom de la REGIE NATIONALE DES USINES RENAULT ou dans la demande européenne EP 0.117.816 au nom de VEGLA GmbH.

Cependant, ces profilés sont des dispositifs complexes, formés de plusieurs pièces composites. Ils nécessitent des procédés de fabrication et de mise en place longs et coûteux, ce qui augmente sensiblement le coût et la durée de pose de la vitre.

Le but de l'invention est de fournir un joint périmétrique de garniture pour vitre fixe, masquant les écarts dus aux tolérances de fabrication et maintenant un écartement optimal entre la vitre et la carrosserie, dont la conception et la pose sont simples et économiques.

Un autre but de l'invention est d'enseigner un procédé de fabrication avantageux particulièrement simple, rapide et économique d'un tel joint de garniture.

Un autre type de joint de garniture est également connu dans l'art antérieur. Il sera décrit plus en détails dans la suite de cette description.

Ce joint de garniture pour pare-brise est composé d'un profilé en matière polymère réalisé par extrusion, entourant la vitre sur trois de ses côtés.

Sa section comporte d'un côté une partie en forme de U destinée à être chaussée sur le bord de la vitre et de l'autre une lèvre souple de masquage dont l'extrémité libre est prévue pour reposer sur la tôle de carrosserie afin de masquer l'interstice inesthétique.

Sur sa face intérieure, c'est-à-dire celle devant être placée vers l'intérieur du véhicule, ce joint de garniture comporte des languettes constituant des butées localisées qui permettent de maintenir un écartement optimal entre ce joint et les bords de l'ouverture.

Ce type de joint présente de nombreux avantages. En effet, il se compose d'une unique pièce en matière polymère, sa pose est facile et rapide, et il répond au problème technique de manière satisfaisante.

Cependant, malgré une matière première peu chère et une forme simple bien adaptée à une fabrication par extrusion, la production d'un tel joint de garniture reste relativement onéreuse. Car, la présence des languettes de calage impose une étape de grugeage complexe et coûteuse après l'extrusion.

En effet, on commence par extruder un profilé qui présente sur toute sa longueur une nervure longitudinale continue de la hauteur des languettes à obtenir. Puis, dans une seconde étape, on enlève par grugeage les zones superflues de la nervure, afin de ne laisser que quelques portions localisées de celle-ci correspondant aux languettes de calage.

L'étape de grugeage est une étape délicate et lente. En effet, il n'est pas possible de réaliser une simple découpe pour enlever une telle longueur de profilé. Le grugeage consiste à enlever petit à petit par « grignotage » la matière superflue.

L'outillage nécessaire est compliqué et coûteux. Par ailleurs, l'extrusion doit être synchronisée avec l'étape lente de grugeage qui de ce fait ralentit l'ensemble du procédé de fabrication.

Pour toutes ces raisons, le prix de revient de ces joints de garniture est, malgré l'apparente simplicité de ces derniers, relativement élevé.

Finalement, il apparaît peu logique de conformer de la matière en profilé pour l'enlever en majorité.

Le but de l'invention est d'enseigner un autre type de joint de garniture pour vitre fixe collée, qui comme le précédent masque les écarts tolérés provenant de la fabrication et maintient un écartement optimal entre la vitre et la carrosserie et dont la pose est simple et rapide, mais dont le prix de revient est nettement inférieur au précédent.

L'invention enseigne également un procédé de fabrication plus simple, rapide et économique d'un tel joint de garniture.

Pour résoudre ce problème technique, le joint selon l'invention se présente aussi sous la forme d'un profilé, destiné à être monté sur les bords d'une vitre fixe obturant une ouverture et notamment une ouverture de véhicule automobile.

Comme dans l'art antérieur, il comporte une rainure longitudinale à section transversale en forme de U couché destinée à être chaussée sur le bord de la vitre et une lèvre de masquage servant à recouvrir l'intervalle inesthétique existant entre le bord de la vitre et celui adjacent de l'ouverture.

Selon une caractéristique essentielle de l'invention, il comporte sur sa face destinée à être placée vers l'intérieur du véhicule, une nervure longitudinale qui présente au moins une et de préférence plusieurs déformations locales formant une ou plusieurs butées de positionnement permettant de maintenir un écartement optimal entre le joint de garniture et les bords de l'ouverture.

De préférence, l'une au moins de ces déformations est une zone aplatie de la nervure qui présente à ce niveau une épaisseur plus fine et une hauteur plus importante que dans les zones adjacentes du reste de sa longueur et forme ainsi une partie saillante pouvant servir de butée de positionnement.

Le procédé de fabrication selon l'invention comprend une première étape d'extrusion permettant de réaliser un profilé comportant une rainure longitudinale à section transversale en forme de U couché destinée à être chaussée sur le bord de la vitre, une lèvre de masquage permettant de recouvrir l'intervalle existant entre le bord de la vitre et celui adjacent de l'ouverture, et sur sa face intérieure une nervure longitudinale continue.

Au cours d'une deuxième étape, on déforme localement cette nervure longitudinale de manière à former une ou plusieurs butées de positionnement.

Cette étape de déformation est de préférence une étape d'aplatissement par écrasement ou pincement au cours de laquelle on aplatit localement la nervure de manière à réduire son épaisseur et à augmenter sa hauteur dans une zone déterminée, afin de former une partie saillante pouvant servir de butée de positionnement.

L'étape de déformation est simple, rapide et nécessite un matériel peu coûteux. Contrairement au grugeage, elle peut très facilement être synchronisée avec l'extrusion qu'elle ne ralentit en aucune façon. Avantageusement grâce au procédé selon l'invention, le prix de revient unitaire d'un tel joint de garniture se trouve fortement abaissé.

D'autres caractéristiques et avantages de l'invention apparaîtront à la lecture de la description détaillée qui va suivre, description faite en référence aux dessins annexés, dans lesquels :
- la figure 1 est une vue générale schématique en perspective de l'avant d'un véhicule automobile équipé autour de son pare-brise d'un joint de garniture selon l'invention ;
- la figure 2 est une vue en plan de la face intérieure d'un joint de garniture à trois tronçons de profilé conforme à l'invention ;
- la figure 3 est une vue schématique en coupe transversale d'un rebord d'ouverture de carrosserie automobile obturée par une vitre fixe collée, sur le bord de laquelle est monté un joint selon l'invention ;
- la figure 4 est une vue en perspective du côté destiné à être placé vers la carrosserie, d'un tronçon de joint de garniture selon l'art antérieur ;
- la figure 5 est une vue en perspective du côté destiné à être placé vers la vitre, d'un tronçon de joint de garniture selon l'art antérieur ;
- la figure 6 est une vue en perspective du côté destiné à être placé vers la carrosserie, d'un tronçon de joint de garniture selon la présente invention ;
- la figure 7 est une vue en perspective du côté destiné à être placé vers la vitre, d'un tronçon de joint de garniture selon la présente invention ;
- la figure 8 est une vue en coupe transversale, selon la ligne de coupe VIII-VIII de la figure 4, d'un joint de garniture selon l'art antérieur à un niveau quelconque de sa longueur en dehors des butées de positionnement ;
- la figure 9 est une vue en coupe transversale, selon la ligne de coupe IX-IX de la figure 4, d'un joint de garniture selon l'art antérieur au niveau d'une butée de positionnement ;
- la figure 10 est une vue en coupe transversale, selon la ligne de coupe X-X de la figure 6, d'un joint de garniture selon la présente invention à un niveau quelconque de sa longueur en dehors des butées de positionnement ;
- la figure 11 est une vue en coupe transversale, selon la ligne de coupe XI-XI de la figure 6, d'un joint de garniture selon la présente invention au niveau d'une butée de positionnement.

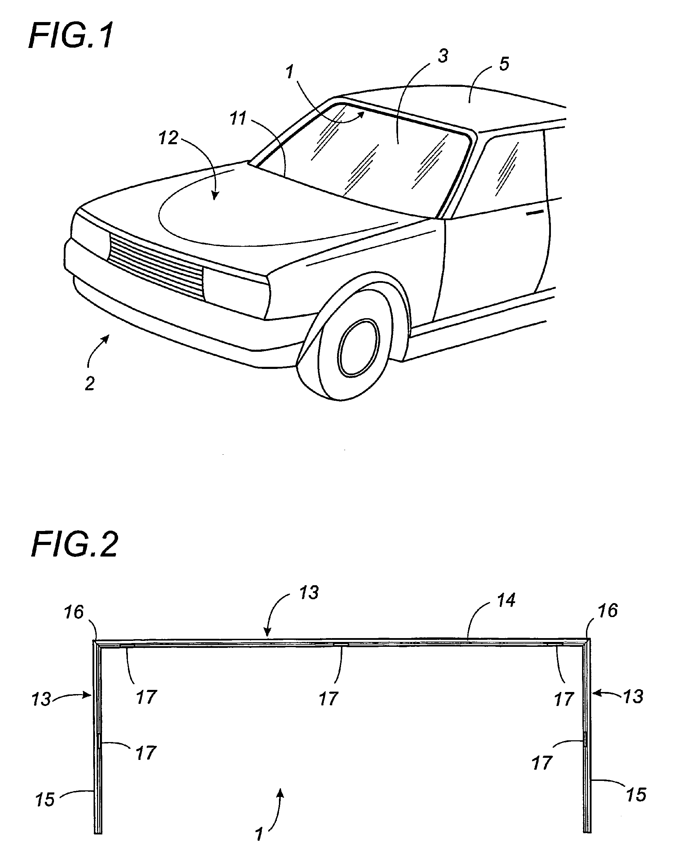

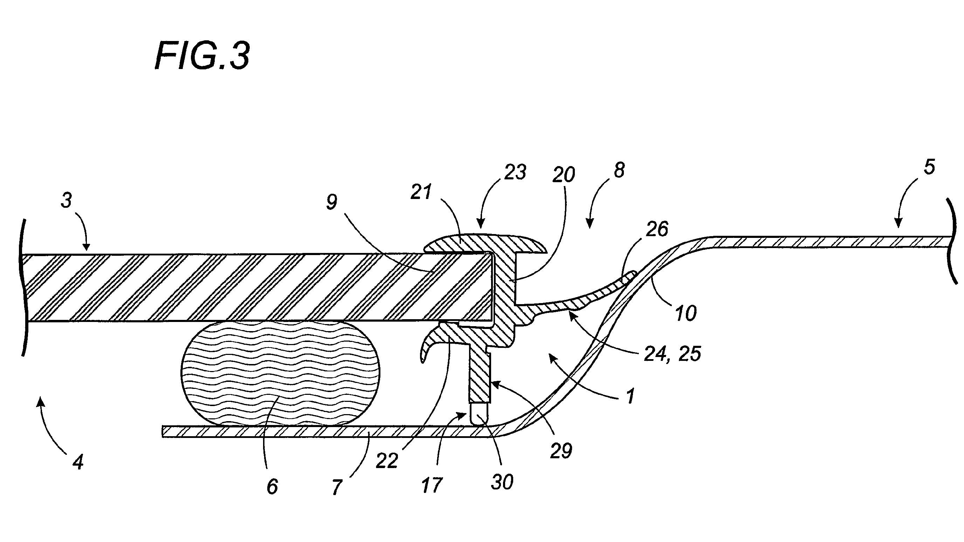

Le dispositif de joint de garniture selon la présente invention ainsi que le procédé de fabrication de celui-ci vont maintenant être décrits de façon détaillée en référence aux figures 1 à 11. Les éléments équivalents représentés sur les différentes figures porteront les mêmes références numériques.

Sur ces différentes figures, on a représenté un joint de garniture de pare-brise 1 constituant un mode de réalisation préférentiel de l'invention. Il doit cependant être bien compris que ces figures ainsi que la description détaillée de celles-ci ne sont en rien limitatives de la portée de l'invention définie par les revendications.

L'invention ne se limite évidemment pas un joint de garniture pour pare-brise, mais peut être utilisée pour tout autre type de vitres fixes collées, telles que par exemple les lunettes arrière ou custodes de véhicules automobiles.

De la même façon, le joint de garniture selon l'invention peut équiper des véhicules routiers, urbains, ferroviaires ou autres. L'invention ne se limite cependant pas au domaine des transports et peut trouver une application dans tout autre secteur où l'on utilise des vitres fixes collées.

Sur la figure 1, on a représenté un véhicule automobile 2 qui comporte à l'avant un pare-brise 3 constitué par une vitre fixe de forme sensiblement rectangulaire.

Le pare-brise 3 est placé sur une ouverture 4 formée dans la carrosserie 5 du véhicule, sur les bords de laquelle il est fixé par collage.

De manière classique, une matière adhésive, de préférence un cordon de colle 6 par exemple de type polyuréthane, est déposée sur un repli 7 de la tôle de la carrosserie 5 bordant l'ouverture à obturer.

Le pare-brise 3 est ensuite placé au niveau de l'ouverture, puis pressé contre le cordon de colle 6 jusqu'à ce qu'il soit dans la position souhaitée.

Du fait des écarts admis par les tolérances existant au niveau de la fabrication de la tôle de carrosserie 5, il existe, lorsque le pare-brise 3 est mis en place sur l'ouverture 4, un interstice 8 entre le bord 9 de la vitre et l'épaulement 10 amorçant le repli 7 de la carrosserie.

Afin de masquer cet interstice 8, visible et inesthétique, le pare-brise 3 est équipé d'un joint de garniture 1 selon l'invention qui le borde sur trois de ses côtés.

Ce joint de garniture 1 peut être périmétrique et ceinturer la vitre 3 sur la totalité de son périmètre, mais peut également la ceinturer sur une partie seulement de son périmètre.

Dans le cas d'un pare-brise il ne s'étend généralement pas sur la totalité de sa périphérie, le bord inférieur 11 de ce dernier restant libre. Bien qu'il soit possible d'équiper également le quatrième côté du pare-brise, l'interstice se retrouvant caché par l'extrémité du capot 12 peut rester non couvert.

Sur la figure 2, le joint de garniture 1 a été représenté seul. Il est composé de trois tronçons de profilé 13 qui ont été disposés de façon appropriée afin de pouvoir encadrer le pare-brise 3 sur trois de ses côtés.

Dans le mode de réalisation représenté, le pare-brise 3 est sensiblement rectangulaire et doit être équipé sur trois de ses côtés. Le joint de garniture 1 comprend donc un tronçon de profilé sensiblement horizontal 14 et deux tronçons de profilé sensiblement verticaux 15. Ces trois tronçons de profilé 13 sont solidarisés les uns aux autres, de préférence par un soudage de leurs extrémités adjacentes 16 préalablement biseautées à 45°.

De manière évidente, le joint selon l'invention peut, sans sortir du cadre de l'invention, être constitué d'un nombre différent de tronçons de profilé et/ou être conformé de manière différente de façon à s'adapter à la vitre qu'il est destiné à équiper.

Par convention dans cette demande, on désignera par face intérieure la face du joint de garniture destinée à être placée en regard de l'intérieur du véhicule et par face extérieure la face du joint destinée à être placée vers l'extérieur du véhicule.

De la face intérieure du joint de garniture selon l'invention, dépassent localement des butées de positionnement 17 au nombre de cinq sur le mode de réalisation de la figure 2.

Ces butées 17 permettent avantageusement de maintenir un écartement optimal du joint 1 par rapport au repli 7 de carrosserie contre lequel il se trouve en appui et par-là de maintenir un écartement optimal de la vitre 3 par rapport à la carrosserie 5.

Ces butées de positionnement 17 sont disposées à des endroits précis du joint de garniture, choisis et imposés pour des raisons techniques et correspondant à des zones de carrosserie où les cotes de fabrication doivent être précisément respectées avec des tolérances faibles. La hauteur de ces butées est déterminée en fonction de ces cotes.

Suivant les applications envisagées pour le joint de garniture, l'homme du métier pourra sans difficulté réaliser selon l'invention un nombre adapté quelconque de butées de positionnement 17 réparties de façon appropriée.

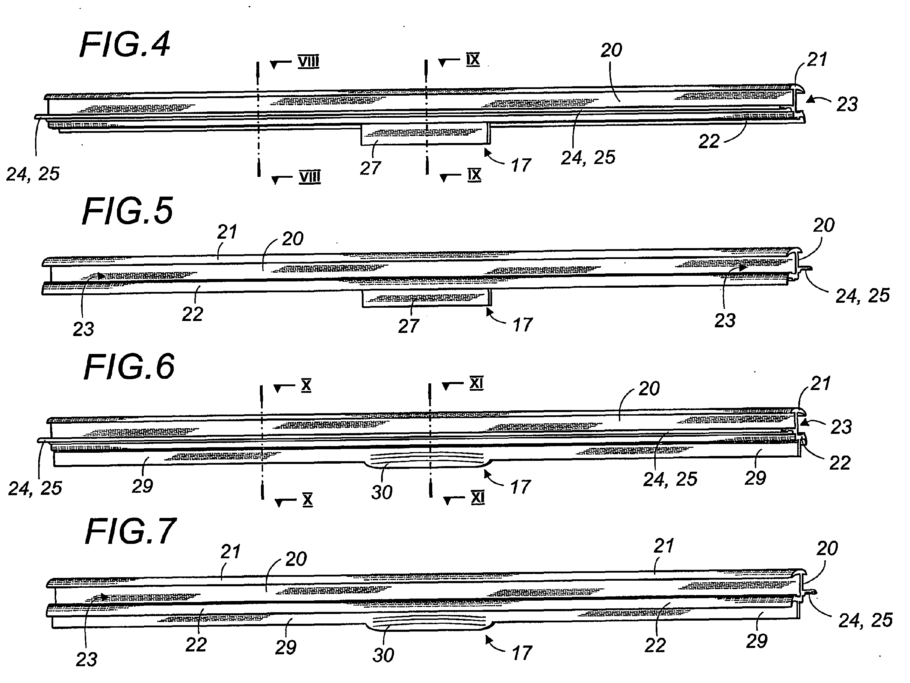

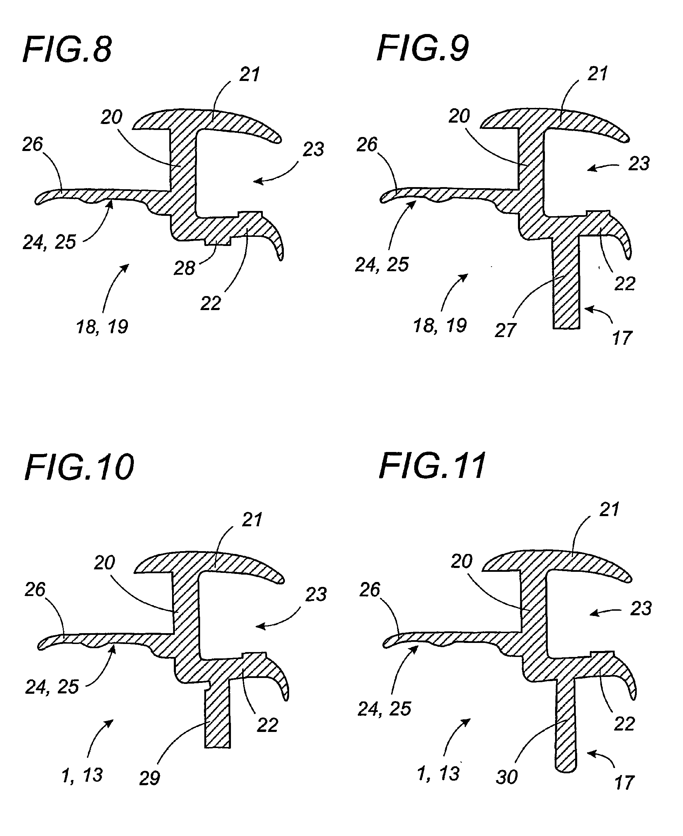

Un tronçon de profilé 13 du joint de garniture 1 selon l'invention a été représenté en perspective sur les figures 6 et 7 et en coupe sur les figures 10 et 11.

A titre de comparaison, un tronçon de profilé 18 d'un joint de garniture 19 selon l'art antérieur a été représenté en perspective sur les figures 4 et 5 et en coupe sur les figures 8 et 9.

Ces tronçons comportent tous deux une paroi longitudinale sensiblement verticale 20 prolongée à ses extrémités par deux parois longitudinales sensiblement horizontales, l'une extérieure 21 et l'autre intérieure 22, formant une rainure 23 de section sensiblement en forme de U couché, dont l'ouverture est dirigée vers le pare-brise 3.

La rainure 23 en forme de U est conformée de manière à pouvoir recevoir dans sa cavité réceptrice le bord 9 du pare-brise et à l'enserrer entre ses parois.

De la paroi sensiblement verticale 20 formant la base du U, s'étend en direction de la carrosserie une paroi souple 24 longitudinale et sensiblement horizontale constituant une lèvre souple de masquage 25 dont l'extrémité libre 26 est prévue pour reposer sur la tôle de carrosserie 5 afin de masquer l'interstice inesthétique 8 existant entre le pare-brise et la carrosserie.

Le joint 19 selon l'art antérieur présente sur sa face intérieure en certains endroits de sa longueur, des languettes 27 sensiblement rectangulaires servant de butées de positionnement.

Comme expliqué dans la partie introductive de cette demande, ces languettes 27 sont obtenues à partir d'une nervure longitudinale 28 présentant initialement la hauteur souhaitée pour les languettes 27, que l'on gruge sur toute la longueur de cette nervure excepté au niveau des languettes 27.

Comme représenté, il ne reste sur le joint 19 selon l'art antérieur après l'étape de grugeage qu'une très petite partie de la nervure longitudinale 28 en dehors des languettes 27.

Au contraire, le joint de garniture 1 selon l'invention comporte, au niveau de sa face intérieure et sur sensiblement toute sa longueur, une nervure longitudinale 29 d'épaisseur relativement importante.

Cette nervure longitudinale 29 présente des déformations 30 locales, réparties sur sa longueur de manière à correspondre aux endroits où une butée de positionnement 17 est nécessaire.

De préférence, ces déformations 30 correspondent à des écrasements localisés de la nervure 29 qui présente à ces endroits une épaisseur plus faible et une hauteur plus importante que sur le reste de sa longueur. Les déformations 30 forment ainsi des parties saillantes qui peuvent servir de butées de positionnement.

L'invention enseigne également un procédé particulièrement avantageux pour fabriquer le joint de garniture selon l'invention.

Le procédé de fabrication comprend une première étape d'extrusion au cours de laquelle on réalise un profilé qui comporte la rainure 23 en forme de U, la lèvre souple de masquage 25 et la nervure longitudinale continue 29.

Au cours d'une deuxième étape, on déforme localement cette nervure longitudinale 29 de manière à former les butées de positionnement 17.

Lors de cette deuxième étape, on aplatit localement la nervure par écrasement ou pincement, de manière à réduire son épaisseur et à augmenter sa hauteur dans une zone déterminée afin de former la partie saillante servant de butée de positionnement. La hauteur finale de la déformation 30 ainsi créée peut être facilement fixée par l'homme du métier afin de correspondre à la hauteur souhaitée pour la butée de positionnement 17.

Cette étape de déformation est de préférence réalisée à froid.

L'étape d'aplatissement peut par exemple être effectuée à l'aide d'une presse pneumatique qui écrase la nervure par le travail du mors d'un outil à mâchoires.

La matière première utilisée pour réaliser le joint de garniture selon l'invention doit être adaptée pour pouvoir subir les deux étapes du procédé précédemment décrit.

Il faut utiliser pour cela une matière polymère susceptible d'être extrudée et permettant une déformation localisée à caractère permanent. Certaines matières plastiques formulées, à propriétés thermoplastiques, sont ainsi particulièrement adaptées. On peut citer par exemple le polypropylène chargé ou le PVC (polychlorure de vinyle).

Une fois mis en forme, le joint de garniture 1 selon l'invention est chaussé à la périphérie de la vitre par sa rainure 23 en forme de U.

Bien que cela n'ait pas été représenté, une matière adhésive peut par exemple être déposée dans le fond de la rainure 23 ou sur la tranche de la vitre 3, afin de renforcer la liaison entre la vitre 3 et le joint de garniture 1.

Le pare-brise 3 équipé de son joint de garniture 1 est ensuite saisi par une machine-outil généralement au moyen de ventouses, positionné au niveau de l'ouverture 4 de carrosserie à obturer, puis pressé contre le cordon de colle 6 préalablement déposé sur le repli 7 de tôle de carrosserie.

Les butées de positionnement 17 formées par les déformations locales 30 permettent d'ajuster la pression appliquée sur le cordon de colle en fixant précisément le positionnement de la vitre. Un collage optimum de la vitre est ainsi assuré.

Le pare-brise 3 représenté sur les différentes figures est constitué d'une vitre simple monolithique. Il peut néanmoins s'agir d'une vitre d'une toute autre nature, comme par exemple un pare-brise feuilleté ou une vitre double à deux plaques de verre juxtaposées.

## Revendications

1. Joint de garniture pour vitre fixe (3) obturant une ouverture (4), notamment une ouverture de véhicule automobile, se présentant sous la forme d'un profilé (13) comportant une rainure longitudinale (23) à section transversale en forme de U couché destinée à être chaussée sur le bord (9) de la vitre (3), une lèvre de masquage (25) recouvrant l'intervalle (8) existant entre le bord de la vitre et celui adjacent de l'ouverture, et, sur sa face intérieure, une nervure longitudinale (29) **caractérisé en ce que** la nervure présente, uniquement dans certaines zones localisées discontinues, au moins une déformation (30) à caractère permanent qui confère localement à la nervure une hauteur plus importante que sur le reste de sa longueur, formant ainsi une partie saillante qui peut servir de butée de positionnement (17) afin de maintenir un écartement optimal entre le joint de garniture (1) et les bords (7) de l'ouverture.

2. Joint de garniture selon la revendication précédente **caractérisé en ce que** l'une au moins de ces déformations (30) est une zone aplatie de la nervure (29) qui présente à ce niveau une épaisseur plus fine et une hauteur plus importante que sur le reste de sa longueur et forme ainsi une partie saillante pouvant servir de butée de positionnement (17).

3. Joint de garniture selon l'une quelconque des revendications précédentes **caractérisé en ce que** la nervure longitudinale (29) présente des déformations locales (30), disposées à des endroits précis du joint de garniture (1), choisis et imposés pour des raisons techniques et correspondant à des zones des bords de l'ouverture où les cotes de fabrication doivent être précisément respectées avec des tolérances faibles.

4. Joint de garniture selon l'une quelconque des revendications précédentes **caractérisé en ce qu'**il comporte cinq déformations locales (30) servant de butées de positionnement (17).

5. Joint de garniture selon l'une quelconque des revendications précédentes **caractérisé en ce qu'**il est destiné à ceinturer la vitre (3) sur la totalité de son périmètre.

6. Joint de garniture selon l'une quelconque des revendications 1 à 4 **caractérisé en ce qu'**il est destiné à ceinturer la vitre (3) sur une partie seulement de son périmètre et de préférence sur trois de ses côtés.

7. Joint de garniture selon l'une quelconque des revendications précédentes **caractérisé en ce qu'**il est formé de plusieurs tronçons de profilé (14, 15) solidarisés les uns aux autres.

8. Joint de garniture selon la revendication précédente **caractérisé en ce que** les tronçons de profilé (14, 15) sont solidarisés les uns aux autres par un soudage de leurs extrémités adjacentes (16) préalablement biseautées à 45°.

9. Joint de garniture selon l'une quelconque des revendications précédentes **caractérisé en ce qu'**il est réalisé en une matière polymère susceptible d'être extrudée et permettant une déformation localisée à caractère permanent.

10. Joint de garniture selon la revendication précédente **caractérisé en ce qu'**il est réalisé en une matière plastique formulée, à propriétés thermoplastiques.

11. Joint de garniture selon la revendication précédente **caractérisé en ce qu'**il est réalisé en polypropylène chargé ou en PVC.

12. Joint de garniture selon l'une quelconque des revendications précédentes **caractérisé en ce qu'**il est destiné à équiper un pare-brise (3), une lunette arrière ou une custode de véhicule automobile.

13. Procédé de fabrication d'un joint de garniture pour vitre fixe (3) obturant une ouverture (4), notamment une ouverture de véhicule automobile, comprenant :
- une étape où l'on extrude un profilé (13) comportant une rainure longitudinale (23) à section transversale en forme de U couché destinée à être chaussée sur le bord (9) de la vitre, une lèvre de masquage (25) permettant de recouvrir l'intervalle (8) existant entre le bord de la vitre et celui adjacent de l'ouverture, et sur sa face intérieure une nervure longitudinale (29) continue, **caractérisé en ce qu'**il comprend :
- une étape où l'on déforme localement cette nervure (29) pour former une ou plusieurs butée(s) de positionnement (17) permettant de maintenir un écartement optimal entre le joint de garniture (1) et les bords (7) de l'ouverture.

14. Procédé de fabrication d'un joint de garniture selon la revendication précédente **caractérisé en ce que** l'étape de déformation est une étape d'aplatissement par écrasement ou pincement au cours de laquelle on aplatit localement la nervure (29) de manière à réduire son épaisseur et à augmenter sa hauteur dans une zone déterminée, afin de former une partie saillante (30) pouvant servir de butée de positionnement (17).

15. Procédé de fabrication d'un joint de garniture selon la revendication précédente **caractérisé en ce que** l'étape d'aplatissement est réalisée à l'aide d'une presse pneumatique qui écrase la nervure (29) par le travail du mors d'un outil à mâchoires.

16. Procédé de fabrication d'un joint de garniture selon l'une quelconque des revendications 13 à 15 **caractérisé en ce que** l'étape de déformation est réalisée à froid.

## Patentansprüche

1. Dichtung für eine feste Scheibe (3), welche eine Öffnung (4), insbesondere eine Öffnung eines Kraftfahrzeugs, verschließt, wobei die Dichtung in Form eines Profils (13) ausgebildet ist, umfassend eine Längsnut (23), welche im Querschnitt in der Form eines liegenden U ausgebildet ist und welches zum Aufsetzen auf den Rand (9) der Scheibe (3) vorgesehen ist, eine Verkleidungslippe (25) zum Verkleiden des Abstandes (8) zwischen dem Rand der Scheibe und dem Rand der daran angrenzenden Öffnung, und an ihrer Innenseite eine longitudinale Rippe (29),
**dadurch gekennzeichnet,**
**dass** die Rippe lediglich in bestimmten diskontinuierlich angeordneten Bereichen, wenigstens eine beständige Verformung (30) aufweist, welche der Rippe lokal eine bedeutendere Höhe gegenüber dem Rest ihrer Länge verleiht und welche folglich einen vorspringenden Teil bildet, wobei der vorspringende Teil als Positionieranschlag (17) dienen kann, um einen optimalen Abstand zwischen der Dichtung (1) und den Rändern (7) der Öffnung einzuhalten.

2. Dichtung nach dem vorherigen Anspruch,
**dadurch gekennzeichnet,**
**dass** wenigstens eine dieser Verformungen (30) ein abgeplatteter Bereich der Rippe (29) ist, welche in diesem Bereich eine geringere Dicke und eine bedeutendere Höhe gegenüber dem Rest ihrer Länge aufweist und folglich einen vorspringenden Teil bildet, welcher als Positionieranschlag (17) dienen kann.

3. Dichtung nach einem der vorherigen Ansprüche,
**dadurch gekennzeichnet,**
**dass** die longitudinale Rippe (29) lokale Verformungen (30) aufweist, welche an bestimmten Stellen der Dichtung (1) angeordnet sind die nach technischen Anforderungen gewählt und vorgegeben sind so dass diese sich in den Bereichen der Ränder der Öffnung, in welcher die Fertigungsmaße mit geringen Toleranzen exakt einzuhalten sind, befinden.

4. Dichtung nach einem der vorherigen Ansprüche,
**dadurch gekennzeichnet,**
**dass** fünf lokale Deformationen (30) ausgebildet sind, welche als Positionieranschlag (17) dienen.

5. Dichtung nach einem der vorherigen Ansprüche,
**dadurch gekennzeichnet,**
**dass** sie zum Umfassen der Scheibe (3) über deren gesamten Umfang vorgesehen ist.

6. Dichtung nach einem der Ansprüche 1 bis 4,
**dadurch gekennzeichnet,**
**dass** sie zum Umfassen der Scheibe (3) nur über einem Teil deren Umfangs, vorzugsweise über drei ihrer Seiten, vorgesehen ist.

7. Dichtung nach einem der vorherigen Ansprüche,
**dadurch gekennzeichnet,**
**dass** sie mit mehreren Profilteilstücken (14, 15) ausgebildet ist, welche miteinander verbunden sind.

8. Dichtung nach einem der vorherigen Ansprüche,
**dadurch gekennzeichnet,**
**dass** die Profilteilstücke (14, 15) mittels einer Schweißverbindung an ihren aneinander liegenden, vorab in einem Winkel von 45° abgeschrägten Enden (16) miteinander verbunden sind.

9. Dichtung nach einem der vorherigen Ansprüche,
**dadurch gekennzeichnet,**
**dass** sie mit einem zum Extrudieren geeigneten PolymerWerkstoff ausgebildet ist, welcher eine dauerhafte lokale Verformung ermöglicht.

10. Dichtung nach einem der vorherigen Ansprüche,
**dadurch gekennzeichnet,**
**dass** sie mit einem Kunststoff mit thermoplastischen Eigenschaften ausgebildet ist.

11. Dichtung nach einem der vorherigen Ansprüche,
**dadurch gekennzeichnet,**
**dass** sie mit gefülltem Polypropylen oder mit PVC ausgebildet ist.

12. Dichtung nach einem der vorherigen Ansprüche,
**dadurch gekennzeichnet,**
**dass** sie zur Ausstattung einer Windschutzscheibe (3), einer Heckscheibe oder einer Seitenscheibe eines Kraftfahrzeuges bestimmt ist.

13. Verfahren zur Herstellung einer Dichtung für eine feste Scheibe (3), welche eine Öffnung (4), insbesondere eine Öffnung eines Kraftfahrzeugs verschließt, umfassend:
- einen Schritt, bei welchem ein Profil (13) extrudiert wird, welches eine Längsnut (23), welche im Querschnitt in der Form eines liegenden U ausgebildet ist und welche zum Aufsetzen auf den Rand (9) der Scheibe vorgesehen ist, eine Verkleidungslippe (25) zum Verkleiden des Abstandes (8) zwischen dem Rand der Scheibe und dem Rand der daran angrenzenden Öffnung und an seiner Innenseite eine longitudinal fortgesetzte Rippe (29) aufweist, **dadurch gekennzeichnet, dass** es umfasst:
- einen Schritt, bei welchem die Rippe (29) zur Bildung eines oder mehrerer Positionieranschläge (17), welche das Einhalten eines optimalen Abstandes zwischen der Dichtung (1) und den Rändern (7) der Öffnung erlauben, lokal verformt wird.

14. Verfahren zur Herstellung einer Dichtung nach dem vorherigen Anspruch,
**dadurch gekennzeichnet,**
**dass** der Schritt der Verformung ein Schritt des Abplattens mittels Pressung oder Klemmung ist, wodurch die Rippe (29) lokal derart abgeflacht wird, dass in einem festgelegten Bereich ihre Dicke verringert und ihre Höhe vergrößert wird zur Bildung eines vorspringenden Bereichs (30), welcher als Positionieranschlag (17) dienen kann.

15. Verfahren zur Herstellung einer Dichtung nach dem vorherigen Anspruch,
**dadurch gekennzeichnet,**
**dass** der Schritt des Abplattens mit einer pneumatischen Presse durchgeführt wird, welche die Rippe (29) mittels der Spannbacken eines Backenwerkzeugs quetscht.

16. Verfahren zur Herstellung einer Dichtung nach einem der Ansprüche 13 bis 15,
**dadurch gekennzeichnet,**
**dass** der Schritt der Verformung mittels Kaltumformung durchgeführt wird.

## Claims

1. A seal for a fixed window (3) covering an opening (4), specifically an opening in an automobile, in the form of a profile (13) comprising a longitudinal groove (23) with a sidewise U-shaped transverse section for attachment to the edge (9) of the window (3) and a masking lip (25) covering the space (8) between the edge of the window and the adjacent edge of the opening, **characterized in that** it comprises on its interior surface a longitudinal rib (29) which has, only in certain discontinuous localized areas, at least one permanent deformation (30) which constitutes a higher area on the rib than along the rest of the rib, thereby forming a projecting portion that serves as a positioning stop (17) in order to maintain optimal spacing between the seal (1) and the edges (7) of the opening.

2. A seal according to the preceding claim **characterized in that** at least one of these deformations (30) is a flattened area on the rib (29) constituting a thinner and higher area than the rest of the rib, thereby forming a projecting portion that serves as a positioning stop (17).

3. A seal according to either one of the preceding claims **characterized in that** the longitudinal rib (29) has local deformations (30) disposed in precise locations on the seal (1), selected and imposed for technical reasons and corresponding to the areas on the edges of the opening where manufacturing standards must be respected precisely with little allowance.

4. A seal according to any one of the preceding claims **characterized in that** it comprises five local deformations (30) serving as positioning stops (17).

5. A seal according to any one of the preceding claims **characterized in that** it is designed to surround the entire perimeter of a window (3).

6. A seal according to any one of claims 1 through 4 **characterized in that** it is designed to surround only a portion of the perimeter of the window (3), preferably three of its sides.

7. A seal according to any one of the preceding claims **characterized in that** it is formed of several profile elements (14, 15) integrated with one another

8. A seal according to the preceding claim **characterized in that** the profile elements (14, 15) are integrated with one another by soldering the adjacent extremities (15) previously bisected at 45°.

9. A seal according to any one of the preceding claims **characterized in that** it is formed of a polymer material that can be extruded and permanently locally deformed.

10. A seal according to the preceding claim **characterized in that** it is formed of a plastic material formulated with thermoplastic properties.

11. A seal according to the preceding claim **characterized in that** it is made of charged polypropylene or PVC.

12. A seal according to any one of the preceding claims **characterized in that** it is designed to be used on a windshield (3), a rear window or a back window on an automobile.

13. A method of manufacturing a seal for a fixed window (3) covering an opening (4), specifically an opening in an automobile, **characterized in that** it comprises:
a step of extruding a profile (13) comprising a longitudinal groove (23) with a sidewise U-shaped transverse section designed for attachment to the edge (9) of the windows, a masking lip (25) for covering the gap (8) between the edge of the window and the adjacent edge of the opening, and on the interior surface, a continuous longitudinal rib (29);
and a step of locally deforming this rib (29) to form one or more positioning stops (17) for maintaining optimal spacing between the seal (1) and the edges (7) of the window.

14. A method of manufacturing a seal according to the preceding claim **characterized in that** the deformation step consists of flattening the rib by crushing or pinching it, during which step the rib (29) is locally flattened to reduce its thickness and increase its height in a predetermined area in order to form a projecting portion (30) that can serve as a positioning stop (17).

15. A method of manufacturing a seal according to the preceding claim **characterized in that** the flattening step is accomplished using a pneumatic press that crushes the rib (29) using the jaws of a gripping tool.

16. A method of manufacturing a seal according to any one of claims 13 through 15 **characterized in that** the deformation step is a cold process.
